# EUROPÄISCHE PATENTSCHRIFT

(11) **EP 1 913 680 B1**
(45) Veröffentlichungstag und Bekanntmachung des Hinweises auf die Patenterteilung: **03.03.2010**
(21) Anmeldenummer: 06778078.3
(22) Anmeldetag: 31.07.2006
(51) Int. Cl.: H02M 3/335

(54) **ELEKTRISCHE STROMQUELLE, INSBESONDERE SCHWEISSSTROMQUELLE**
ELECTRICAL CURRENT SOURCE, IN PARTICULAR WELDING CURRENT SOURCE
SOURCE DE COURANT ELECTRIQUE, NOTAMMENT SOURCE DE COURANT DE SOUDAGE

(30) Priorität: 02.08.2005 DE 102005036806
(43) Veröffentlichungstag der Anmeldung: 23.04.2008
(73) Patentinhaber: Lorch Schweisstechnik GmbH, 71549 Auenwald (DE)
(72) Erfinder: AIGNER, Hubert, A-4715 Taufkirchen (AT)
(74) Vertreter: Hoeger, Stellrecht & Partner Patentanwälte
(86) Internationale Anmeldenummer: PCT/EP2006/064846
(87) Internationale Veröffentlichungsnummer: WO 2007/014933

(56) Entgegenhaltungen:
- EP-B1- 1 251 991
- DE-A1- 4 011 461
- DE-A1- 4 411 227
- JP-A- 10 216 936
- JP-A- 2002 066 739

## Beschreibung

Die Erfindung bezieht sich auf einer elektrische Stromquelle, insbesondere Schweißstromquelle, mit den Merkmalen des Oberbegriffes von Patentanspruch 1.

Die EP 1 251 991 B1 zeigt eine Schweißstromquelle mit einem Resonanzkonverter, der eine eingangsseitig mit einer Gleichstromquelle verbundene Brückenschaltung aufweist. Die Brückenschaltung ist als Vollbrücke ausgebildet. Ausgangsseitig ist die Brückenschaltung mit einem Resonanzkreis verbunden, dessen Ausgänge direkt mit dem Lastkreis verbunden sind.

Eine weitere Stromquelle mit Resonanzkonverter und als Halbbrücke ausgebildeter Brückenschaltung und ohne Transformator ist aus der DE 44 11 227 A1 bekannt.

Es ist grundsätzlich bekannt, Konverter parallel zu schalten, wenn im Lastkreis eine hohe Leistung benötigt wird. Dies ist bei Verwendung sog. Durchfluss- bzw. Sperrkonverter ohne weiteres möglich, weil diese Konverter eine taktsynchrone Pulsweitenmodulation zulassen, ohne dass sich eine nennenswerte ungleiche Leistungsverteilung auf die Konverter ergeben kann. Die von jedem Konverter übertragene Leistung ist praktisch nur von der jeweiligen Pulsweite der Pulsweitenmodulation abhängig.

Bei Resonanzkonvertern hängt dagegen die übertragene Leistung sehr stark von der Bemessung der Bauelemente des Resonanzkreises ab. Aufgrund der unvermeidlichen Streuung der Bauelemente muss deshalb bei Parallelschaltung von Resonanzkonvertern mit einer sehr unterschiedlichen Leistungsübertragung der parallel geschalteten Konverter gerechnet werden, wenn alle parallelen Konverter in gleicher Weise moduliert werden. Dies ist gleichbedeutend damit, dass ohne besondere Maßnahmen eine gleichmäßige Verteilung der Leistung auf mehrere parallele Resonanzkonverter nur mit individueller Steuerung der parallelen Konverter erreichbar ist. Dies ist gleichbedeutend mit einem unerwünscht hohen Steueraufwand. Hinzu kommt, dass jedem Resonanzkonverter ein gesonderter ausgangsseitiger Gleichrichter eingangsseitig des Laststromkreises zugeordnet sein müsste, um Wechselstromverluste zu vermeiden.

Aus der japanischen Veröffentlichung JP 10216936 ist eine elektrische Schweißstromquelle bekannt, bei der zwei Resonanzkonverter parallel geschaltet sind. Jeder Resonanzkonverter weist eine eingangsseitig mit einer elektrischen Gleichstromquelle verbundene Brückenschaltung sowie einen ausgangsseitig der Brückenschaltung angeordneten Resonanzkreis mit einem Transformator auf. Die Sekundärseite des Transformators ist mit einem ausgangsseitigen Lastkreis verbunden. Die Sekundärseiten der Transformatoren der Resonanzkreise sind elektrisch in Reihe zueinander geschaltet.

Es ist Aufgabe der Erfindung, bei einer Stromquelle der eingangs angegebenen Art einerseits hohe Leistungen im Lastkreis zu ermöglichen und andererseits den notwendigen Schaltungs- und Steueraufwand äußerst gering zu halten.

Diese Aufgabe wird erfindungsgemäß durch eine elektrische Stromquelle mit den Merkmalen von Patentanspruch 1 gelöst.

Die Erfindung beruht auf dem allgemeinen Gedanken, eine für die parallelen Resonanzkonverter gemeinsame Sekundärseite der Transformatoren vorzusehen, so dass die parallelen Resonanzkreise "starr" miteinander gekoppelt werden und die parallelen Resonanzkonverter bezüglich ihrer Resonanzschwingungen praktisch synchronisiert sind. Hierzu ist den Resonanzkonvertern auf der Sekundärseite der Transformatoren eine gemeinsame Parallelkapazität zugeordnet, so dass die Resonanzkonverter parallel als Parallelresonanzkonverter oder als Serienparallelresonanzkonverter arbeiten. Die gemeinsame Parallelkapazität wirkt für alle Resonanzkonverter frequenzbestimmend, so dass die Resonanzschwingungen der Konverter besonders stark synchronisiert werden.

Damit ist es ohne weiteres möglich, die Brückenschaltungen der parallel geschalteten Resonanzkonverter völlig synchron zu takten, mit der Folge, dass auch bei einer Vielzahl paralleler Resonanzkonverter nur ein gleicher Steuerungsaufwand wie bei einem einzigen Resonanzkonverter erforderlich wird.

Desweiteren kann für die parallelen Resonanzkonverter ein einziger Gleichrichter auf der Sekundärseite der Transformatoren vorgesehen werden.

Die Reihenschaltung der Sekundärseiten der Transformatoren kann gemäß einer bevorzugten Ausführungsform so ausgebildet sein, dass jeweils vollständige Sekundärseiten elektrisch in Reihe geschaltet sind.

Statt dessen ist es gemäß einer weiteren bevorzugten Ausführungsform der Erfindung auch möglich, an den genannten Transformatoren sekundärseitige Mittelpunktanzapfungen vorzusehen und die Reihenschaltung so auszubilden, dass jeweils ein Sekundärseitenteil des Transformators eines Resonanzkonverters elektrisch direkt in Reihe liegt zu einem Sekundärseitenteil des Transformators eines anderen Resonanzkonverters.

Im übrigen wird hinsichtlich bevorzugter Merkmale die Erfindung auf die Ansprüche sowie die nachfolgende Erläuterung der Zeichnung verwiesen, anhand der besonders bevorzugte Ausführungsformen der Erfindung näher beschrieben werden.

Schutz wird nicht nur für ausdrücklich dargestellte oder angegebene Merkmalskombinationen sondern prinzipiell auch für beliebige Unterkombinationen dieser Merkmale beansprucht.

In der Zeichnung zeigt

Fig. 1 ein Schaltbild einer ersten Ausführungsform der Erfindung mit zwei parallelen Resonanzkonvertern, die eingangsseitig parallel mit einer elektrischen Gleichspannungsquelle verbunden sind,

Fig. 2 eine gegenüber Fig. 1 abgewandelte Ausführungsform, bei der die parallelen Resonanzkonverter eingangsseitig in Reihe mit der elektrischen Gleichstromquelle verbunden sind,

Fig. 3 eine der Fig. 1 entsprechende Anordnung mit mehr als zwei parallelen Resonanzkonvertern,

Fig. 4 eine Ausführungsform, bei der die Sekundärseiten der ausgangsseitigen Transformatoren der Resonanzkonverter Mittelpunktanzapfungen aufweisen,

Fig. 5 eine Abwandlung der in Fig. 4 dargestellten Schaltung

Fig. 6 eine erste Variante mit Halbbrückenschaltung,

Fig. 7 eine weitere Variante mit Halbbrückenschaltung und

Fig. 8 eine Abwandlung der Ausführung nach Fig. 2.

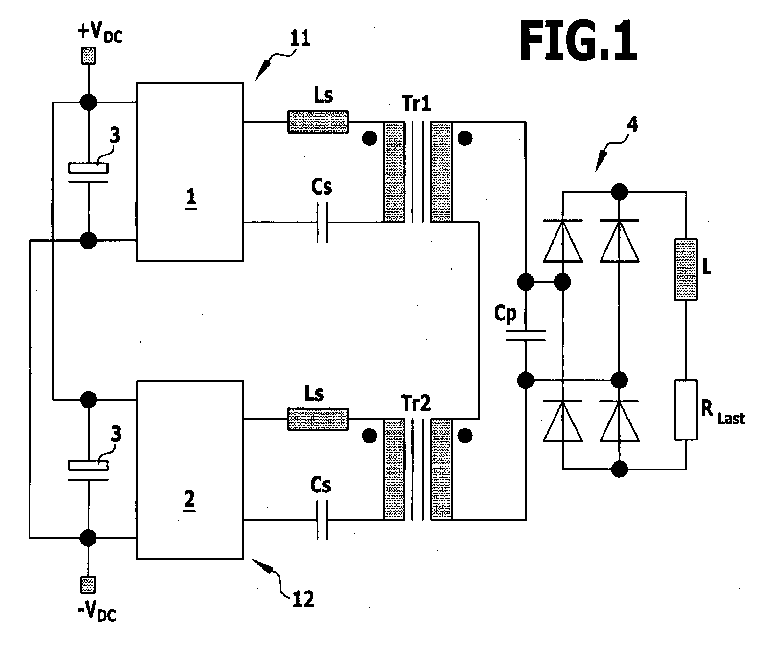

Gemäß Fig. 1 sind mit den Ausgangskontakten + V_{DC} und - V_{DC} zwei Resonanzkonverter 11 und 12 in Parallelschaltung zueinander verbunden. Jeder Resonanzkonverter 11 und 12 besitzt eingangsseitig eine getaktete Brückschaltung 1 bzw. 2, die die eingangsseitige elektrische Gleichspannung der Gleichstromquelle in eine ausgangsseitige elektrische Wechselspannung umsetzt, deren Frequenz der Taktfrequenz entspricht. Um zu vermeiden, dass elektrische Wechselströme bzw. -spannungen auf die Eingangsseite der Brückenschaltungen 1 und 2 zurückgekoppelt werden können, sind die Eingänge der beiden Brückenschaltungen 1 und 2 miteinander jeweils über Kondensatoren 3 mit hoher Kapazität, beispielsweise über Elektrolyt-Kondensatoren, miteinander verbunden.

Zwischen den Ausgängen der Brückenschaltungen 1 und 2 sind jeweils Reihenschaltungen angeordnet, die eine Induktivität Ls, die Primärseite eines Hochfrequenztransformators Tr1 bzw. Tr2 sowie eine Serienkapazität Cs umfassen. Die Sekundärseiten der Transformatoren Tr1 und Tr2 sind elektrisch in Reihe miteinander verbunden und parallel zu einer für beide Resonanzkonverter 11 und 12 gemeinsamen Parallelkapazität Cp geschaltet. Die Induktivität Ls kann auch durch die integrierte Streuinduktivität des Transformators Tr1 bzw. Tr2 gebildet werden.

Parallel zur Parallelkapazität Cp ist eine für beide Resonanzkonverter 11 und 12 gemeinsame, bezüglich der Transformatoren Tr1 und Tr2 sekundärseitige Gleichrichterschaltung 4 angeordnet, die einen elektrischen Lastkreis, beispielsweise einen Schweißprozess speist, der in Fig. 1 als elektrisches Ersatzschaltbild, d.h. mit einer Reihenschaltung aus einer Induktivität L und einem Lastwiderstand Rₗₐₛₜ dargestellt ist.

Durch die Reihenschaltung der Sekundärseiten der Transformatoren Tr1 und Tr2 werden die Resonanzkonverter 11 und 12 miteinander stark gekoppelt und schwingungsmäßig miteinander synchronisiert, denn über die in Serie geschalteten Sekundärwicklungen der Transformatoren Tr1 und Tr2 wirkt der Parallelresonanzkondensator Cp auf die einzelnen Resonanzkreise eingangsseitig der Transformatoren Tr1 und Tr2.

Da außerdem die Parallelkapazität Cp erfindungsgemäß parallel zu den in Reihe geschalteten Sekundärseiten der Transformatoren Tr1 und Tr2 geschaltet ist, ist sie für beide Resonanzkonverter 11 und 12 ein bestimmendes Bauteil für die Resonanzfrequenz. Trotz unvermeidlicher Streuung der Werte der Induktivitäten Ls sowie der Kapazitäten Cs treten somit zwischen den Ausgängen der Brückenschaltungen 1 und 2 praktisch gleiche und gleichphasige elektrische Ströme bzw. gleiche und gleichphasige elektrische Spannungen auf, wenn die Brückenschaltungen 1 und 2 synchron getaktet werden.

Genau diese synchrone Taktung der Brückenschaltungen 1 und 2 ist erfindungsgemäß vorgesehen und im Hinblick auf geringen Steueraufwand für die Taktung erwünscht. Im Ergebnis tragen somit die Resonanzkonverter 11 und 12 bei synchroner Taktung ihrer Brückenschaltungen 1 und 2 jeweils etwa hälftig zu der dem Lastkreis zugeführten Leistung bei.

Im Beispiel der Fig. 1 sind die Resonanzkonverter 11 und 12 jeweils als Serien-Parallel-Resonanzkonverter ausgebildet, wobei jeder Konverter 11 bzw. 12 die zu seiner Induktivität Ls in Serie liegende Kapazität Cs sowie die für beide Konverter gemeinsame Parallelkapazität Cp aufweist.

Abweichend von der zeichnerischen Darstellung könnten die Konverter 11 und 12 auch als Parallel-Resonanzkonverter ausgebildet sein. Dann entfallen die Kapazitäten Cs.

Grundsätzlich kann die gemeinsame Parallelkapazität Cp entfallen, wenn die Serienkapazitäten Cs vorhanden und die Resonanzkonverter dementsprechend als Serienresonanzkonverter ausgebildet sind. Allein die für die Konverter gemeinsame Sekundärseite der Transformatoren Tr1 und Tr2 sorgt für eine hinreichend synchrone Schwingung der Konverter bei synchroner Taktung der Brückenschaltungen 1 und 2. Durch die gemeinsame Parallelkapazität Cp wird die Synchronisierung der Schwingungen zusätzlich verbessert.

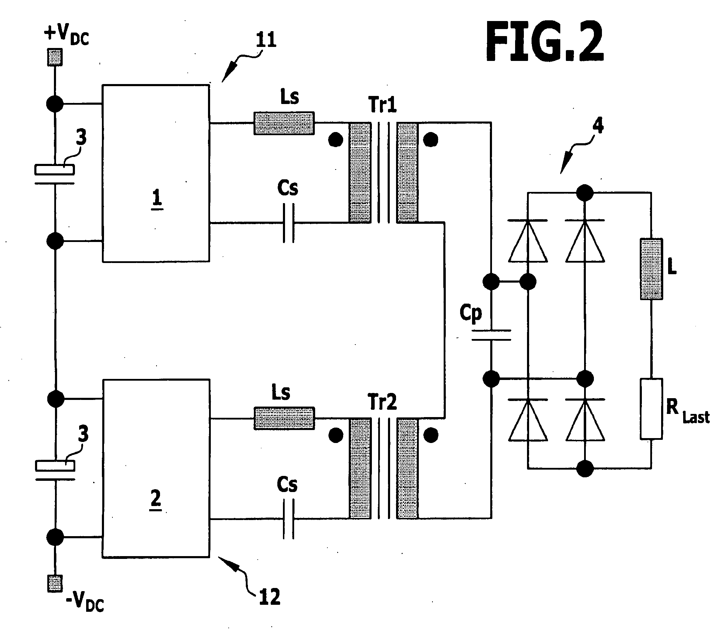

Die Anordnung der Fig. 2 unterscheidet sich von der Anordnung nach Fig. 1 lediglich dadurch, dass die Eingänge der Brückenschaltungen 1 und 2 der Konverter 11 und 12 zwischen den Kontakten + V_{DC} und - V_{DC} der Gleichstromquelle in Reihe geschaltet sind. Eine solche Schaltung ist dann zweckmäßig, wenn die elektrische Eingangsspannung an den Brückenschaltungen 1 und 2 halb so groß wie die elektrische Spannung zwischen den Kontakten der Gleichstromquelle sein soll.

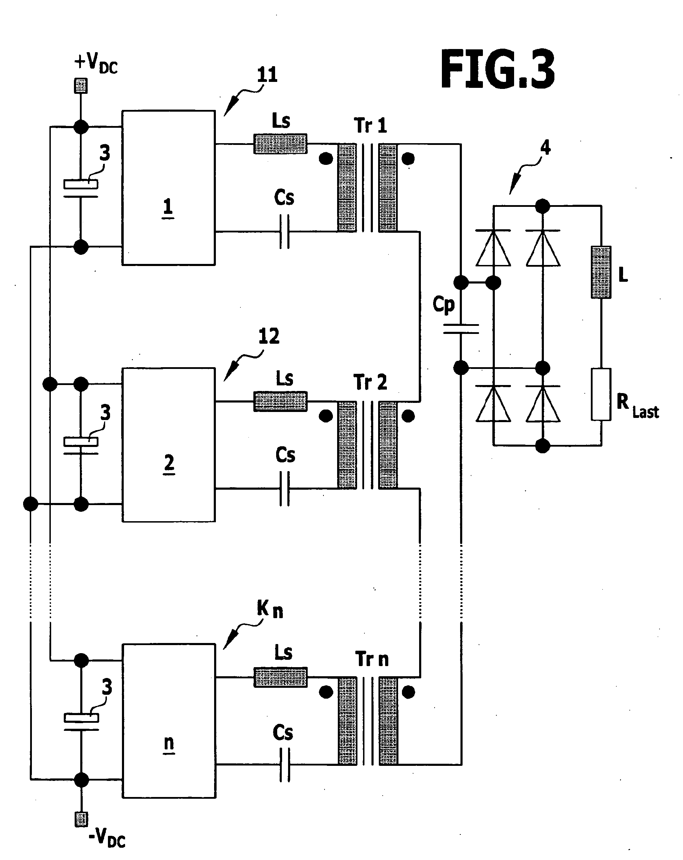

Fig. 3 zeigt nun, dass mehr als zwei Resonanzkonverter 11 und 12 bis Kn mit einer gemeinsamen Sekundärseite der Transformatoren Tr1 bis Trn und gemeinsamer Parallelkapazität Cp parallel arbeiten und mit einem gemeinsamen Gleichrichter 4 eingangsseitig des Lastkreises L, Rₗₐₛₜ verbunden sein können.

Die zugehörigen Brückenschaltungen 1 und 2 bis n können dabei, wie in Fig. 3 dargestellt ist, eingangsseitig parallel geschaltet sein, analog der Anordnung in Fig. 1.

Grundsätzlich ist es jedoch auch möglich, eine eingangsseitige Serienschaltung gemäß Fig. 2 vorzusehen.

Die Serien-Kapazitäten Cs können ggf. auch entfallen.

Falls die Serienkapazitäten Cs vorhanden sind, könnte die gemeinsame Parallelkapazität Cp grundsätzlich entfallen, weil allein die Reihenschaltung der Sekundärseiten der Transformatoren Tr1 bis Trn eine hinreichende Synchronisierung der Konverter 11, 12 bis Kₙ bewirkt. Im Hinblick auf eine besonders gute Synchronisierung ist die Parallelkapazität jedoch vorteilhaft.

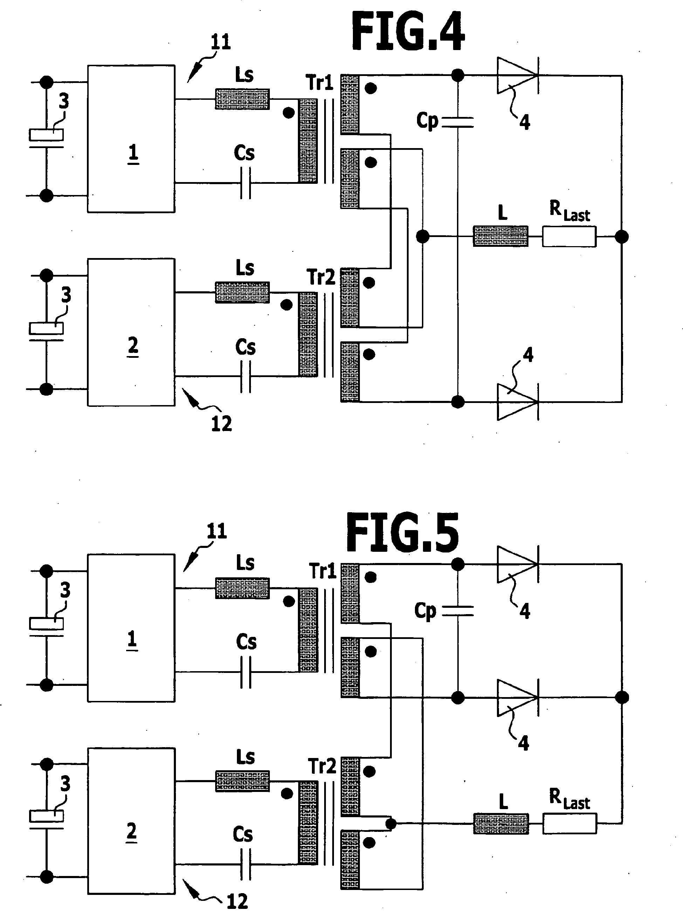

Die Fig. 4 und 5 zeigen beispielhaft zwei Ausführungsvarianten, bei denen die Sekundärseiten der Transformatoren Tr1 und Tr2 mit Mittelanzapfungen versehen sind. Dementsprechend können die sekundärseitigen Teilwicklungen der Transformatoren Tr1 und Tr2 in unterschiedlicher Weise in Reihe geschaltet werden.

In den Fig. 1 bis 5 wird davon ausgegangen, dass die Brückenschaltungen 1 und 2 bis Kₙ jeweils als Vollbrücken ausgebildet sind.

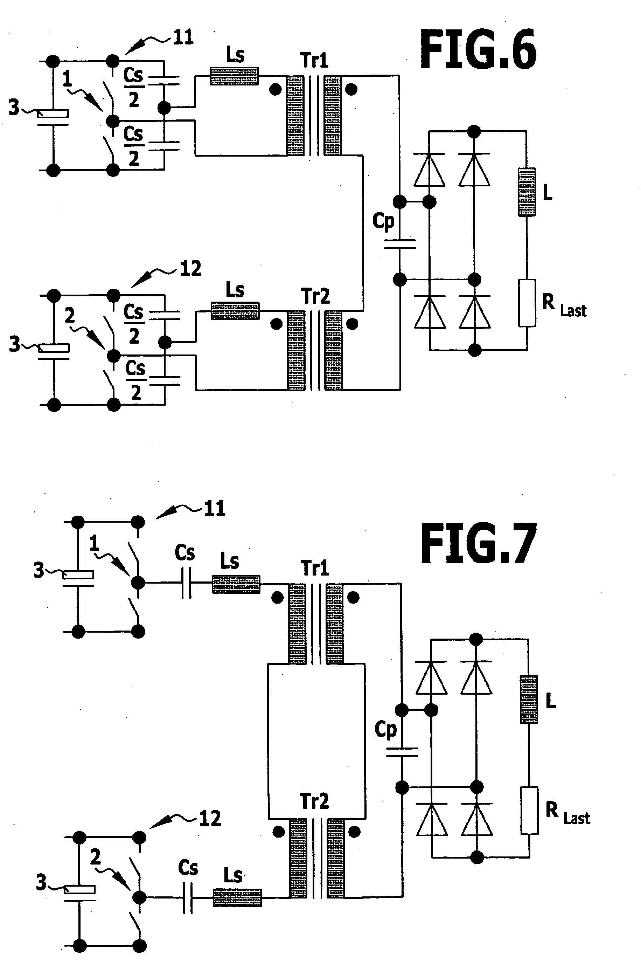

Fig. 6 zeigt nun, dass die Brückenschaltungen 1 und 2 auch als Halbbrücken ausgebildet sein können, wobei die Serienkapazität Cs durch zwei Kondensatoren mit den Kapazitäten Cs/2 gebildet wird.

In Verbindung mit der gemeinsamen Parallelkapazität Cp, die parallel zu den in Reihe geschalteten Sekundärseiten der Transformatoren Tr1 und Tor2 liegt, bilden die Resonanzkonverter 11 und 12 wiederum Serien-Parallelkonverter.

Die Parallelkapazität Cp kann ggf. entfallen, da die Reihenschaltung der Sekundärseiten der Transformatoren Tr1 und Tr2 für eine hinreichende Synchronisierung der Resonanzkonverter 11 und 12 bei synchroner Taktung der Halbbrücken 1 und 2 sorgt. Jedoch ist die Anordnung der Parallelkapazität Cp im Hinblick auf einen besonders hohen Synchronisierungsgrad äußerst vorteilhaft.

Eingangsseitig können die Brückenschaltungen 1 und 2 in gleicher Weise parallel oder in Reihe mit einer elektrischen Gleichspannungsquelle verbunden werden, wie es in den Fig. 1 und 2 beispielhaft dargestellt ist.

Eine weitere Möglichkeit, zwei Resonanzkonverter 11 und 12 mit eingangsseitiger Halbbrückenschaltung 1 und 2 parallel zu schalten, zeigt die Fig. 7. Hier sind neben den Sekundärseiten auch die Primärseiten der Transformatoren Tr1 und Tr2 in Reihe geschaltet. Auf diese Weise bilden die Resonanzkonverter 11 und 12 elektrisch einen einzigen "großen" Resonanzkonverter, wobei die Halbbrücken 1 und 2 gemeinsam wie eine Vollbrücke wirken.

Damit die Resonanzkonverter 11 und 12 der Fig. 7 auch einzeln, unabhängig voneinander eingesetzt werden können, müssen Umschalt- bzw. Umsteckanordnungen vorgesehen sein, die es ermöglichen, den in Fig. 7 jeweils mit dem parallelen Resonanzkonverter verbundenen Anschluss der Primärseite des Transformators Tr1 des Resonanzkonverters 11 bzw. des Transformators Tr2 des Resonanzkonverters 12 in der in Fig. 6 gezeigten Weise zwischen zwei in Reihe zwischen den Eingängen der jeweiligen Brückenschaltung 1 bzw. 2 geschalteten Kapazitäten anzuschließen.

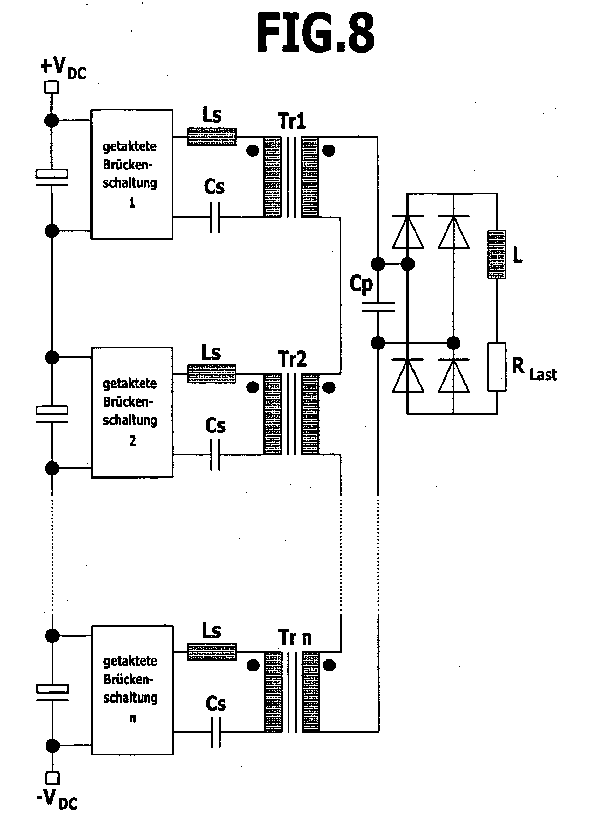

Die Fig. 8 zeigt im Unterschied zu Fig. 2, die eine Schaltung mit zwei Modulen bzw. Brückenschaltungen 1,2 darstellt, eine entsprechende Schaltung mit n Modulen/Brückenschaltungen.

## Patentansprüche

1. Elektrische Stromquelle, insbesondere Schweißstromquelle, mit Resonanzkonverter (11, 12), der eine eingangsseitig mit einer elektrischen Gleichstromquelle verbundene bzw. verbindbare getaktete Brückenschaltung (1,2,n) sowie einen ausgangsseitig der Brückenschaltung angeordneten Resonanzkreis mit einem Transformator (Tr1,Tr2,Trn) aufweist und über die Sekundärseite des Transformators mit einem ausgangsseitigen Lastkreis, insbesondere einem Schweißprozess (L,Rₗₐₛₜ) verbunden bzw. verbindbar ist, wobei mindestens zwei eingangsseitig in Reihe oder Parallelschaltung verbundene bzw. verbindbare Resonanzkonverter (11,12,Kₙ) vorgesehen und die Sekundärseiten der jeweiligen Transformatoren elektrisch ganz oder teilweise in Reihe geschaltet sind,
**dadurch gekennzeichnet, dass** die Resonanzkonverter (11,12,Kₙ) eine gemeinsame Parallelkapazität (Cp) aufweisen, die elektrisch parallel zu den in Reihe geschalteten Sekundärseiten bzw. Sekundärseitenteilen der Transformatoren (Tr1,Tr2,Trn) liegt.

2. Stromquelle nach Anspruch 1,
**dadurch gekennzeichnet, dass** jeweils vollständige Sekundärseiten der Transformatoren (Tr1,Tr2,Trn) in Reihe geschaltet sind.

3. Stromquelle nach Anspruch 1,
**dadurch gekennzeichnet, dass** die Transformatoren (Tr1,Tr2,Trn) sekundärseitige Mittelpunktanzapfungen aufweisen und jeweils ein Sekundärseitenteil jedes Transformators elektrisch direkt in Reihe liegt zu einem Sekundärseitenteil des Transformators eines anderen Resonanzkonverters.

4. Stromquelle nach einem der Ansprüche 1 bis 3,
**dadurch gekennzeichnet, dass** eingangsseitig des Lastkreises (L,Rₗₐₛₜ) ein für alle Resonanzkonverter (11,12,Kₙ) gemeinsamer Gleichrichter (4) angeordnet ist.

5. Stromquelle nach einem der Ansprüche 1 bis 4,
**dadurch gekennzeichnet, dass** zwischen den Eingängen der Brückenschaltungen (1,2,n) Kondensatoren (3) mit hoher Kapazität angeordnet sind.

6. Stromquelle nach einem der Ansprüche 1 bis 5,
**dadurch gekennzeichnet, dass** die Brückenschaltungen (1,2,n) als Vollbrücken ausgebildet sind.

7. Stromquelle nach einem der Ansprüche 1 bis 5,
**dadurch gekennzeichnet, dass** die Brückenschaltungen (1,2,n) als Halbbrücken ausgebildet sind.

8. Stromquelle nach einem der Ansprüche 1 bis 7,
**dadurch gekennzeichnet, dass** jeder Resonanzkonverter (11,12,Kₙ) eine eigene Serienkapazität (Cs) aufweist, die elektrisch in Reihe zur Primärseite des Transformators (Tr1,Tr2,Trn) des jeweiligen Resonanzkonverters liegt.

## Claims

1. Electrical current source, in particular, welding current source, with a resonant converter (11, 12), which has a clocked bridge circuit (1, 2, n) which at the input end is or can be connected to an electrical direct-current source, and a resonant circuit which is disposed at the output end of the bridge circuit and has a transformer (Tr1, Tr2, Trn), and is or can be connected to an output-end load circuit, in particular, a welding process (L, R_{load}), via the secondary side of the transformer, at least two resonant converters (11, 12, Kₙ) being provided which at the input end are or can be connected in series or in parallel, and the secondary sides of the respective transformers being electrically connected entirely or partially in series, **characterized in that** the resonant converters (11, 12, Kₙ) have a common parallel capacitance (Cp) which is electrically connected in parallel with the secondary sides or secondary-side portions of the transformers (Tr1, Tr2, Trn), which are connected in series.

2. Current source according to Claim 1, **characterized in that** entire secondary sides of the transformers (Tr1, Tr2, Trn) are connected in series in each case.

3. Current source according to Claim 1, **characterized in that** the transformers (Tr1, Tr2, Trn) have secondary-side center taps and in each case a secondary-side portion of each transformer is electrically connected directly in series with a secondary-side portion of the transformer of another resonant converter.

4. Current source according to one of Claims 1 to 3, **characterized in that** a rectifier (4) which is common to all the resonant converters (11, 12, Kn) is disposed at the input end of the load circuit (L, R_{load}).

5. Current source according to one of Claims 1 to 4, **characterized in that** capacitors (3) with a high capacitance are disposed between the inputs of the bridge circuits (1, 2, n).

6. Current source according to one of Claims 1 to 5, **characterized in that** the bridge circuits (1, 2, n) are in the form of full bridges.

7. Current source according to one of Claims 1 to 5, **characterized in that** the bridge circuits (1, 2, n) are in the form of half-bridges.

8. Current source according to one of Claims 1 to 7, **characterized in that** each resonant converter (11, 12, Kn) has its own series capacitance (Cs) which is electrically connected in series to the primary side of the transformer (Tr1, Tr2, Trn) of the respective resonant converter.

## Revendications

1. Source de courant électrique, en particulier source de courant de soudage, comportant un convertisseur de résonance (11, 12), qui présente un circuit (1, 2, n) cadencé relié ou pouvant être relié côté entrée à une source de courant continu électrique ainsi qu'un circuit de résonance disposé côté sortie du circuit en pont comportant un transformateur (Tr1, Tr2, Trn) et est relié ou peut être relié par l'intermédiaire du côté secondaire du transformateur à un circuit de charge côté sortie, en particulier un processus de soudage (L, Rₗₐₛₜ), dans laquelle au moins deux convertisseurs résonnants reliés ou pouvant être reliés côté entrée en série ou en parallèle (11, 12, Kₙ) sont prévus et les côtés secondaires des transformateurs respectifs sont reliés électriquement complètement ou partiellement en série,
**caractérisée en ce que** les convertisseurs résonnant (11, 12, Kₙ) présentent une capacité parallèle commune (Cp), qui se trouve électriquement parallèle aux côtés secondaires ou parties de côtés secondaires des transformateurs reliés en série (Tr1, Tr2, Trn).

2. Source de courant selon la revendication 1,
**caractérisée en ce que** les côtés secondaire entiers respectifs des transformateurs (Tr1, Tr2, Trn) sont reliés en série.

3. Source de courant selon la revendication 1,
**caractérisée en ce que** les transformateurs (Tr1, Tr2, Trn) présentent des prises médianes côté secondaire et une partie de côté secondaire respective de chaque transformateur est reliée électriquement directement en série à une partie de côté secondaire du transformateur d'un autre convertisseur résonnant.

4. Source de courant selon l'une des revendications 1 à 3,
**caractérisée en ce qu'**un égaliseur (4) commun à tous les convertisseurs résonnants (11, 12, Kn) est disposé côté entrée du circuit de charge (L, Rₗₐₛₜ).

5. Source de courant selon l'une des revendications 1 à 4,
**caractérisée en ce que** des condensateurs à haute capacité (3) sont disposés entre les entrée des circuits en pont (1, 2, n).

6. Source de courant selon l'une des revendications 1 à 5,
**caractérisée en ce que** les circuits en pont (1, 2, n) sont réalisés sous forme de pont intégral.

7. Source de courant selon l'une des revendications 1 à 5,
**caractérisée en ce que** les circuits en pont (1, 2, n) sont réalisés sous la forme de demi pont.

8. Source de courant selon l'une des revendications 1 à 7,
**caractérisée en ce que** chaque convertisseur résonnant (11, 12, Kₙ) présente une capacité série propre (Cs), qui se trouve électriquement en série par rapport au côté primaire du transformateur (Tr1, Tr2, Trn) du convertisseur résonnant respectif.
